# FASCICULE DE BREVET EUROPEEN

(11) **EP 0 913 451 B1**
(45) Date de publication et mention de la délivrance du brevet: **08.01.2003**
(21) Numéro de dépôt: 98402679.9
(22) Date de dépôt: 27.10.1998
(51) Int. Cl.: C10G 35/09

(54) **Procédé d'hydroreformage Catalytique**
Katalytische Hydroreformierungsverfahren
Catalytic hydroforming process

(30) Priorité: 31.10.1997 FR 9713686
(43) Date de publication de la demande: 06.05.1999
(73) Titulaire: INSTITUT FRANCAIS DU PETROLE, 92852 Rueil-Malmaison Cedex (FR)
(72) Inventeur: Le Peltier, Fabienne, 92500 Rueil Malmaison (FR); Didillon, Blaise, 92500 Rueil Malmaison (FR); Clause, Olivier, 78400 Chatou (FR)

(56) Documents cités:
- US-A- 4 548 918

## Description

La présente invention concerne un nouveau procédé d'hydroréformage catalytique et de production d'aromatiques, en présence d'un catalyseur renfermant au moins un support, au moins un métal du groupe VIII de la classification périodique des éléments, et au moins un élément additionnel M choisi dans le groupe constitué par le germanium, l'étain, le plomb, le rhénium, le gallium, l'indium et le thalium. Ce catalyseur peut aussi contenir un autre élément et/ou un métalloide tel que le soufre et/ou tout autre élément chimique tel qu'un halogène ou composé halogéné.

Les formulations de catalyseurs utilisés dans les procédés de conversion d'hydrocarbures ont fait l'objet d'un très grand nombre d'études. Les brevets et publications démontrant que l'addition de promoteurs à un métal de base améliore la qualité des catalyseurs sont fort nombreux.

Pour les catalyseurs de réformage catalytique, on connaît de longue date les catalyseurs acides renfermant outre un support, un métal noble de la famille du platine et au moins un métal additionnel M (FR-A-2 495 605). Ces catalyseurs sont bifonctionnels car ils associent deux fonctions essentielles pour l'obtention de performances correctes: une fonction hydro-déshydrogénante qui assure la déshydrogénation des naphtènes et l'hydrogénation de précurseurs de coke et une fonction acide qui assure l'isomérisation des naphtènes et des paraffines, et la cyclisation des paraffines longues. Le platine présente une activité hydrogénolysante au détriment des rendements en essence et/ou aromatiques souhaités en réformage catalytique ou dans le procédé de production d'aromatiques. Cette activité hydrogénolysante peut être fortement réduite, donc la sélectivité du catalyseur augmentée, par l'ajout d'un métal additionnel M. Par ailleurs, l'ajout de cet élément M peut aussi augmenter les propriétés hydrogénantes du platine, ce qui favorise l'hydrogénation des précurseurs de coke et donc la stabilité du catalyseur.

Ces éléments sont ajoutés sous différentes formes telles que sels minéraux ou composés organométalliques. La façon dont ces modificateurs sont introduits n'est pas indifférente car elle conditionne fortement les propriétés du catalyseur. Ainsi l'introduction du métal M est avantageusement effectuée à l'aide d'un composé organométallique dudit métal M. Cette technologie d'introduction du métal M a été décrite dans le brevet US 4 548 918 de la demanderesse. Le métal M est introduit sous la forme d'au moins un composé organométallique choisi dans le groupe formé par les complexes, en particulier les complexes carbonyles, polycétoniques des métaux M et les hydrocarbyls métaux du métal M tels que les alkyles, les cycloalkyles, les aryles, les akylaryles métaux et les arylalkyles métaux.

Cette introduction de l'élément additionnel M sous la forme d'un composé organométallique conduit à des catalyseurs plus performants mais nécessite l'emploi d'un solvant organique. Le solvant d'imprégnation décrit selon la technlogie du brevet US 4 548 918 est choisi dans le groupe constitué par les solvants organiques oxygénés contenant de 2 à 8 atomes de carbone par molécule, et les hydrocarbures paraffiniques, naphténiques ou aromatiques contenant essentiellement de 6 à 15 atomes de carbone par molécule, et les composés organiques oxygénés halogénés contenant de 1 à 15 atomes de carbone par molécule. Ces solvants peuvent être utilisés seuls ou en mélange entre eux.

On a maintenant découvert dans la présente invention qu'il est possible de préparer ces catalyseurs particulièrement performants avec une introduction du métal M sous la forme d'un complexe organométallique soluble dans un solvant aqueux. Ceci représente un progrès considérable de facilité de mise en oeuvre lors de la fabrication du catalyseur. En effet, l'usage de quantités industrielles de solvants organiques présente d'importants inconvénients en termes de sécurité (inflammabilité, toxicité) et en termes de coûts.

Le support du catalyseur selon l'invention comporte au moins un oxyde réfractaire qui est généralement choisi parmi les oxydes de métaux des goupes IIA, IIIA, IIIB, IVA ou IVB de la classification périodique des éléments tels que par exemple les oxydes de magnésium, d'aluminium, de silicium, de titane, de zirconium, de thorium pris seuls ou en mélange entre eux ou en mélange avec d'autres oxydes de la classification périodique . On peut aussi utiliser le charbon. On peut aussi utiliser des zéolithes ou tamis moléculaires de type X, Y, mordénite, faujasite, ZSM-5, ZSM-4, ZSM-8, ainsi que les mélanges d'oxydes de métaux des groupes IIA, IIIA, IIIB, IVA et IVB avec du matériau zéolithique.

Le support préféré est l'alumine, dont la surface spécifique est avantageusement comprise entre 5 et 400 m² par gramme, de préférence entre 50 et 350 m² par gramme.

Le catalyseur selon l'invention, renferme outre un support :
a) au moins un métal du groupe VIII choisi parmi l'iridium, le nickel, le palladium, le platine, le rhodium et le ruthénium. Le platine et l'iridium sont les métaux préférés. Le pourcentage pondéral est choisi entre 0,1 et 10 % et de préférence entre 0,1 et 5 %.
b) au moins un élément additionnel M choisi dans le groupe constitué par le germanium, l'étain, le plomb, le rhénium, le gallium, l'indium et le thallium. L'étain et le germanium sont les éléments préférés. Le pourcentage pondéral est choisi entre 0,01 et 10 %, et de préférence entre 0,02 et 5 %. On peut avantageusement dans certains cas utiliser à la fois au moins deux des métaux de ce groupe.

Le catalyseur peut contenir en plus de 0,1 à 3 % poids d'un halogène ou composé halogéné. Il peut aussi contenir de 0,01 à 2 % poids d'un élément tel que le soufre.

Le catalyseur peut être préparé par différentes procédures d'imprégnation du support et l'invention n'est pas limitée à une procédure d'imprégnation déterminée. Quand on utilise plusieurs solutions, on peut procéder à des séchages et/ou des calcinations intermédiaires.

L'élément additionnel M peut être introduit lors de l'élaboration du support. Une méthode consiste par exemple à malaxer la poudre humide de support avec les précurseurs du catalyseur et à mettre ensuite en forme et sécher.

On peut introduire le métal du groupe VIII, le métal additionnel M, éventuellement l'halogène ou le composé halogéné, éventuellement le métalloïde, simultanément ou successivement, dans n'importe quel ordre. Selon l'invention, la mise en contact de l'élément organométallique M est caractérisé en ce qu'il est introduit dans un solvant aqueux.

Dans une autre méthode, le métal additionnel M, peut-être introduit lors de la synthèse du support selon une technique de type Sol-Gel. Par exemple, pour un support contenant de l'alumine, un gel mixte métal M-alumine peut être obtenu en hydrolysant avec une solution aqueuse d'un composé organométallique du métal M une solution organique de Al(OR')₃ dans un solvant tel ROH ou R'OH. R et R' peuvent désigner un groupement alkyl de type méthyl, éthyl, isopropyl, n-propyl, butyl, voire un groupement plus lourd, tel le n-hexyl. Le solvant alcoolique doit être déshydraté de façon poussée avant l'introduction de l'alcoolate d'aluminium. Après l'hydrolyse, un traitement thermique du gel obtenu opéré à une température comprise entre 200 et 800°C, de préférence entre 300 et 700°C et de manière encore plus préférée entre 400 et 500°C, permet d'assurer la réaction complète du composé organométallique hydrosoluble du métal M avec le gel, ce qui entraîne la formation de l'oxyde mixte Al₂O₃-MOₓ.

Dans une autre méthode le métal M peut être ajouté à un sol d'alumine. Le brevet US-3 929 683 décrit l'introduction de l'étain sous forme de sel, par exemple SnCl₂ dans un sol d'alumine. Selon la présente invention, il est possible d'ajouter un composé organométallique hydrosoluble de métal M à un hydrosol d'alumine, obtenu par exemple en précipitant à pH 4-5 une solution acide de AlCl₃, puis de favoriser la réaction du composé du métal M avec l'hydrosol d'alumine, par exemple sous l'effet de la chaleur ou d'une base.

Le précurseur de l'élément M peut être choisi, sans que cette liste soit limitative, dans le groupe des composés halogénés, des hydroxydes, des oxydes, des carbonates, et des carboxylates de composés organométalliques de l'élément M. Ces composés comprennent au moins une liaison carbone-M. Le précurseur de l'élément M peut être aussi choisi parmi les composés de formule générale (R1)ₓM(R2)_{y} avec x+y=valence du métal M et où R1 est choisi dans le groupe des fonctions alkyles, cycloalkyles, aryles, alkylaryles et arylalkyles et R2 est une fonction de la forme CₐH_{b}R'_{c} où R' représente une fonction hydroxyde, carboxylate, PO₃H ou SO₃H.

Dans une technique de préparation selon l'invention, le catalyseur est obtenu par imprégnation du support, à l'aide d'une solution aqueuse ou organique d'au moins un composé de métal du groupe VIII, le volume de la solution étant de préférence en excès par rapport au volume de rétention du support ou égal à ce volume. Le support imprégné est ensuite filtré, éventuellement lavé à l'eau distillée puis séché et calciné sous air habituellement entre 110 et environ 500°C, puis ensuite réduit sous hydrogène à une température habituellement comprise entre environ 200 et environ 600°C et de préférence entre environ 300 et environ 500°C. Le produit obtenu est alors imprégné par une solution aqueuse d'un composé d'étain, de germanium, de plomb, de rhénium, de gallium, d'indium ou de thallium. D'une manière particulièrement avantageuse, on utilise une solution aqueuse d'un composé carboxylate d'étain, par exemple l'acétate de tributyl étain.

Le volume de la solution aqueuse est de préférence égal au volume de rétention du support et de manière encore plus préférée en excès par rapport à ce volume. La valeur de la concentration d'au moins un métal M dans la solution aqueuse est choisie avantageusement entre 0,01 et 25 mmol/l et de manière préférée entre 0,5 et 20 mmol/l et de manière encore plus préférée entre 0,5 et 15 mmol/l. La valeur de pH de la solution est choisie avantageusement entre 10 et 14 et de manière préférée entre 10 et 12.

Après avoir laissé le contact entre le support imprégné du métal du groupe VIII et la solution contenant au moins un composé de l'élément M pendant plusieurs heures, le produit est filtré, éventuellement lavé à l'eau puis séché. On termine habituellement par une calcination entre 300 et 600°C, de préférence en effectuant un balayage d'air pendant plusieurs heures.

Dans une autre technique selon l'invention, le catalyseur est obtenu par imprégnation d'une solution aqueuse d'au moins un composé dudit métal M, le volume de la solution étant de préférence égal au volume de rétention du support et de manière encore plus préférée en excès par rapport à ce volume. D'une manière particulièrement avantageuse, on utilise une solution aqueuse d'un composé carboxylate d'étain. La valeur de la concentration d'au moins un métal M dans la solution aqueuse est choisie avantageusement entre 0,01 et 25 mmol/l et de manière préférée entre 0,5 et 20 mmol/l et de manière encore plus préférée entre 0,5 et 15 mmol/l. La valeur de pH de la solution est choisie avantageusement entre 10 et 14 et de manière préférée entre 10 et 12. Après avoir laissé le contact entre le solide et la solution d'imprégnation pendant plusieurs heures, le produit est ensuite séché. On termine habituellement par une calcination entre 300 et 600°C, de préférence en effectuant un balayage d'air durant plusieurs heures. Le solide obtenu est ensuite imprégné à l'aide d'une solution aqueuse ou organique d'au moins un composé de métal du groupe VIII, le volume de la solution étant de préférence en excès par rapport au volume de rétention du support ou égal à ce volume. Après quelques heures de mise en contact, le produit obtenu est ensuite séché puis calciné sous air entre 300 et 600°C, de préférence en effectuant un balayage d'air durant plusieurs heures.

Avant utilisation on réduit le catalyseur sous hydrogène par exemple entre 20 et 600°C afin d'obtenir une phase métallique active. La procédure de ce traitement consiste par exemple en une montée lente de la température sous courant d'hydrogène jusqu'à la température maximale de réduction, comprise par exemple entre 20 et 600°C, et de préférence entre 90 et 500°C, suivie d'un maintien pendant par exemple durant 1 à 6 heures à cette température.

Cette réduction pouvant être effectuée aussitôt après la calcination, ou plus tard chez l'utilisateur. Il est aussi possible de réduire directement le produits séché directement chez l'utilisateur.

Il est aussi possible d'effectuer la réduction préalable du composé de métal du groupe VIII en solution par des molécules organiques à caractère réducteur tels que l'acide formique. On peut alors introduire le composé de l'élément additionnel M simultanément ou successivement. Une possibilité consiste à filtrer, puis sécher le catalyseur obtenu. Il peut être alors calciné puis réduit dans les conditions décrites ci-dessus. Il est aussi possible d'effectuer la réduction directement à partir du produit séché.

Selon l'invention, le catalyseur décrit précédemment est mis en oeuvre dans les procédés de réformage des essences et de production d'aromatiques. Les procédés de réformage permettent d'augmenter l'indice d'octane des fractions essences provenant de la distillation du pétrole brut et/ou d'autres procédés de raffinage. Les procédés de production d'aromatiques fournissent les bases (benzène, toluène et xylènes) utilisables en pétrochimie. Ces procédés revêtent un intérêt supplémentaire en contribuant à la production de quantités importantes d'hydrogène indispensable pour les procédés d'hydrogénation de d'hydrotraitement de la raffinerie. Ces deux procédés se différencient par le choix des conditions opératoires et de la composition de la charge.

La charge typique traitée par ces procédés contient des hydrocarbures paraffiniques, naphténiques et aromatiques contenant de 5 à 12 atomes de carbone par molécule. Cette charge est définie, entre autres, par sa densité et sa composition pondérale. Cette charge est mise en contact avec le catalyseur selon la présente invention à une température comprise entre 400 et 700°C. Le débit massique de charge traitée par unité de masse de catalyseur peut varier de 0,1 à 10 kg/kg/h. La pression opératoire peut être fixée entre la pression atmosphérique et 4 MPa. Une partie de l'hydrogène produit est recyclé selon un taux de recyclage molaire compris entre 0,1 et 10. Ce taux est le rapport molaire débit d'hydrogène recyclé sur débit de charge.

Les exemples qui suivent illustrent l'invention sans toutefois en limiter la portée.

### EXEMPLE 1

On prépare deux catalyseurs A et B renfermant 0.25 % poids de platine, 0.14% poids d'étain et 1.2 % poids de chlore. Le support est une alumine γ de surface spécifique de 210 m² par gramme.

### Catalyseur A (comparatif)

Le catalyseur A est préparé selon les techniques de l'art antérieur. A 10 g de support alumine on ajoute 140 cm³ d'une solution aqueuse d'acide chlorhydrique et de chlorure stannique contenant 0,014 g d'étain. On laisse en contact 3 heures et on essore. On met alors le solide en contact avec 140 cm³ d'un solution aqueuse d'acide hexachloroplatinique contenant 0,025 g de platine. On laisse 3 heures en contact, on sèche 1 heure à 120°C puis on calcine pendant 2 heures à 500 °C.

### Catalyseur B (selon l'invention)

Une quantité de 10 g de support alumine est mise en contact avec 140 cm³ d'une solution aqueuse ammoniacale (pH 11) contenant 0,014 g d'étain sous la forme de tributyl acétate d'étain (Bu₃SnOC(O)CH₃). Après 3 heures de réaction à la température ambiante, le solide est filtré, puis séché 1 heure à 120°C et calciné à 500°C durant 2 heures. On met alors en contact 10 g de ce solide avec 140 cm³ d'un solution aqueuse d'acide chlorydrique et d'acide hexachloroplatinique contenant 0,025 g de platine. On laisse 3 heures en contact, on sèche 1 heure à 120°C puis on calcine pendant 2 heures à 500 °C.

### EXEMPLE 2

Les catalyseurs A et B sont soumis à un test de reformage catalytique réalisé dans un réacteur tubulaire isotherme. 10 g de catalyseur sont réduits à 510 °C durant 2 heures sous un débit de 20 litres par heure d'hydrogène. Les conditions opératoires sont les suivantes :
- charge : n-heptane
- température : 480 ou 510 °C
- pression : 0.8 MPa
- H₂/nC₇ (molaire) 4
- débit massique nC₇ liquide /masse de catalyseur : 3 h⁻¹

Les résultats obtenus dans ces conditions sont rapportés dans le tableau 1. Les rendements sont exprimés en % poids par rapport à la charge.

**Tableau 1**

| Catalyseurs | Température (°C) | Rendements (% poids) | | |
|---|---|---|---|---|
| | | aromatiques | H₂ | C₁-C₄ |
| A | 480 | 25.4 | 0.92 | 34.5 |
| | 510 | 39.9 | 1.62 | 36.6 |
| | | | | |
| B | 480 | 28.2 | 0.99 | 27.0 |
| | 510 | 43.7 | 1.95 | 33.0 |

Le catalyseur B préparé selon l'invention, en milieu aqueux à partir d'un précurseur organométallique, présente de meilleures performances que le catalyseur A préparé selon les techniques de l'art antérieur.

## Revendications

1. Procédé d'hydroréformage catalytique et de production d'aromatiques, en présence d'un catalyseur renfermant au moins un support, au moins un métal du groupe VIII de la classification périodique des éléments, et au moins un élément additionnel M choisi dans le groupe constitué par le germanium; l'étain, le plomb, le rhénium, le gallium, l'indium et le thallium, ledit procédé étant **caractérisé en ce qu'**on utilise un catalyseur préparé selon un procédé dans lequel l'élément additionnel M est introduit dans un solvant aqueux sous la forme d'au moins un composé organométallique, soluble dans un solvant aqueux et comprenant au moins une liaison carbone-M.

2. Procédé selon la revendication 1, **caractérisé en ce que** la charge est constituée d'hydrocarbures paraffiniques, naphténiques et aromatiques contenant de 5 à 12 atomes de carbone par molécule.

3. Procédé selon l'une des revendications 1 à 2 tel que le catalyseur contient en outre au moins un métalloïde.

4. Procédé selon l'une des revendications 1 à 3 tel que le catalyseur contient en outre au moins un halogène ou un composé halogéné.

5. Procédé selon l'une des revendications 1 à 4 tel que dans le catalyseur le métal du groupe VIII est choisi parmi l'iridium, le nickel, le palladium, le platine, le rhodium et le ruthénium, de préférence le platine et l'iridium.

6. Procédé selon l'une des revendications 1 à 5 tel que dans le catalyseur l'élément M est choisi parmi le germanium et l'étain.

7. Procédé selon l'une des revendications 1 à 6 tel que dans le catalyseur le précurseur de l'élément M est choisi dans le groupe des composés halogénés, des hydroxydes, des oxydes, des carbonates et des carboxylates de composés organométalliques de l'élément M.

8. Procédé selon l'une des revendications 1 à 7 tel que dans le catalyseur le précurseur de l'élément M est choisi parmi les composés de formule générale (R1)ₓ M (R2)_{y} avec x+y=valence du métal M et où R1 est choisi dans le groupe des fonctions alkyles, cycloalkyles, aryles, alkylaryles et arylalkyles et R2 est une fonction de la forme CₐHbR'_{c} où R' représente une fonction hydroxyde, carboxylate, PO₃H ou SO₃H.

9. Procédé selon l'une des revendications 1 à 8 tel que dans le catalyseur le précurseur de l'élément M est choisi dans le groupe des carboxylates de composés organiques de l'élément M.

10. Procédé selon l'une des revendications 1 à 9 tel que dans le catalyseur le précurseur de l'élément M est l'acétate de tributyl étain.

11. Procédé selon l'une des revendications 1 à 10 tel que dans le catalyseur le métal du groupe VIII, l'élément additionnel M, éventuellement l'halogène, éventuellement le métalloïde, sont introduits successivement ou simultanément sur le support.

12. Procédé selon l'une des revendications 1 à 11 tel que l'on prépare le catalyseur selon les étapes, dans n'importe quel ordre :
• on imprègne un support à l'aide d'une solution aqueuse ou organique d'au moins un métal du groupe VIII, on filtre, on sèche, on calcine, on réduit,
• on imprègne le produit obtenu par une solution aqueuse d'au moins un composé de l'élément M, on filtre, on sèche, on calcine.

13. Procédé selon l'une des revendications 1 à 12 tel que lors de la préparation du catalyseur, on imprègne le support avec une solution aqueuse d'au moins un composé du métal M, le volume de la solution aqueuse étant au moins égal au volume de rétention du support, et de préférence supérieure à ce volume.

14. Procédé selon l'une des revendications 1 à 13 tel que lors de la préparation du catalyseur, la concentration en au moins un métal M dans la solution aqueuse est comprise entre 0,01 et 25 mmol/l.

15. Procédé selon la revendication 14 tel que la concentration en au moins un métal M dans la solution aqueuse est comprise entre 0,5 et 20 mmol/l et de préférence entre 0,5 et 15 mmol/l.

16. Procédé selon l'une des revendications 1 à 15 tel que lors de la préparation du catalyseur, la valeur de pH de la solution aqueuse d'au moins un composé du métal M est choisie entre 10 et 14 et de manière préférée entre 10 et 12.

17. Procédé selon l'une des revendications 1 à 11 tel que dans la préparation du catalyseur on introduit au moins un élément additionnel M lors de l'élaboration du support.

18. Procédé selon la revendication 17 tel que dans la préparation du catalyseur, l'élément additionnel M est introduit lors de la synthèse du support selon une technique de type SOL-GEL.

19. Procédé selon la revendication 18 tel. que dans la préparation du catalyseur on hydrolyse avec une solution aqueuse d'au moins un composé organométallique de métal M une solution organique d'un composé alcoxy d'un métal du support dans un solvant alcoolique, et on chauffe à une température comprise entre 200 et 800°C.

20. Procédé selon l'une des revendications 1 à 19 tel que le catalyseur est réduit sous hydrogène à une température comprise entre 20 et 600°C, de préférence entre 90 et 500°C.

21. Procédé selon l'une des revendications 1 à 20 tel que l'on effectue une réduction préalable du composé du métal VIII en solution par des molécules organiques à caractère réducteur tel que l'acide formique.

22. Procédé selon l'une des revendications 1 à 21 tel que la charge est mise en contact avec le catalyseur à une température comprise entre 400 et 700°C, avec un débit massique de charge traitée par unité de masse de catalyseur compris entre 0,1 et 10 kg/kg/h, sous une pression comprise entre la pression atmosphérique et 4 MPa.

23. Procédé selon l'une des revendications 1 à 22 tel que au moins une partie de l'hydrogène produit est recyclé selon un taux de recyclage molaire compris entre 0,1 et 10.

## Patentansprüche

1. Verfahren zum katalytischen Hydro-Reformieren und zum Herstellen von Aromaten mit einem Katalysator, der mindestens einen Träger umschließt, mit mindestens einem, Metall der Gruppe VIII des Periodensystems der Elemente und mindestens einem zusätzlichen Element M, das aus einer Gruppe ausgewählt ist, die gebildet wird von Germanium, Zinn, Blei, Rhenium, Gallium, Indium und Thallium, wobei dieses Verfahren **gekennzeichnet ist durch** Verwenden eines Katalysators, der hergerichtet ist mit einem Verfahren, bei dem das zusätzliche Element M zugeführt wird in einer wässerigen Lösung in Form von mindestens einer organo-metallischen Zusammensetzung, die löslich ist in einer wässerigen Lösung und mindestens eine Kohlenstoff-M Verbindung aufweist.

2. Verfahren gemäß Anspruch 1, **dadurch gekennzeichnet, daß** die Füllung gebildet ist aus parafinen, naftalinen und aromatischen Kohlewasserstoffen, die 5 bis 12 Kohlestoff-Atome pro Molekül enthalten.

3. Verfahren gemäß einem der Ansprüche 1 bis 2, **dadurch gekennzeichnet, daß** der Katalysator unter anderem mindestens ein Metalloid enthält.

4. Verfahren gemäß einem der Ansprüche 1 bis 3, **dadurch gekennzeichnet, daß** der Katalysator unter anderem mindestens ein Halogen oder eine halogenisierte Zusammensetzung enthält.

5. Verfahren gemäß einem der Ansprüche 1 bis 4, **dadurch gekennzeichnet, daß** das Metall der Gruppe VIII im Katalysator ausgewählt ist aus Iridium, Nickel, Palladium, Platin, Rhodium und Ruthenium, vorzugsweise aus Platin und Iridium.

6. Verfahren gemäß einem der Ansprüche 1 bis 5, **dadurch gekennzeichnet, daß** das Element M im Katalysator ausgewählt ist aus Germanium und Zinn.

7. Verfahren gemäß einem der Ansprüche 1 bis 6, **dadurch gekennzeichnet, dass** der Vorläufer des Elements M im Katalysator ausgewählt ist aus der Gruppe der halogenen Zusammensetzungen, den Hydroxiden, den Oxyden, den Kohlestoffen und den Karboxylaten der organo-metallischen Zusammensetzungen des Elements M.

8. Verfahren gemäß einem der Ansprüche 1 bis 7, **dadurch gekennzeichnet, dass** der Vorläufer des Elements M im Katalysator ausgewählt ist aus den Zusammensetzungen mit der allgemeinen Formel (R1)ₓM(R2)_{y}, wobei x + y = Wertigkeit des Metalls M ist und oder R1 ausgewählt ist aus der Gruppe der alkylen, cycloalkinen, arylen, alkylarylen und arylalkylen Funktionen und R2 eine Funktion ist der Form CₐH_{b}R'_{c}, wobei R' eine hydroxyde, karboxylate Funktion PO₃H oder SO₃H darstellt.

9. Verfahren gemäß einem der Ansprüche 1 bis 8, **dadurch gekennzeichnet, daß** der Vorläufer des Elements M im Katalysator ausgewählt ist aus der Gruppe der Karboxylate der organischen Zusammensetzungen des Elements M.

10. Verfahren gemäß einem der Ansprüche 1 bis 9, **dadurch gekennzeichnet, daß** der Vorläufer des Elements M im Katalysator das Acetat des tributylen Zinns ist.

11. Verfahren gemäß einem der Ansprüche 1 bis 10, **dadurch gekennzeichnet, daß** im Katalysator das Metall der Gruppe VIII, das zusätzliche Element M, möglicherweise das Halogen, möglicherweise das Metalloid nacheinander oder gleichzeitig dem Träger zugeführt werden.

12. Verfahren gemäß einem der Ansprüche 1 bis 11, **dadurch gekennzeichnet, dass** der Katalysator hergerichtet wird mit egal wie aufeinander folgenden Schritten:
Imprägnieren des Trägers mit Hilfe einer wässerigen oder organischen Lösung mindestens eines Metalls der Gruppe VIII, Filtrieren, Trocknen, Kalzinieren, Reduzieren,
Imprägnieren des erhaltenen Produkts mit einer wässerigen Lösung mindestens einer Zusammensetzung des Elements M, Filtrieren, Trocknen, Kalzinieren.

13. Verfahren gemäß einem der Ansprüche 1 bis 12, **dadurch gekennzeichnet, dass** beim Herrichten des Katalysators der Träger mit einer wässerigen Lösung mindestens einer Zusammensetzung des Metalls M imprägniert wird, wobei das Volumen der wässerigen Lösung mindestens gleich dem Rückhaltevolumen des Trägers ist und vorzugsweise höher als dieses Volumen ist.

14. Verfahren gemäß einem der Ansprüche 1 bis 13, **dadurch gekennzeichnet, daß** beim Herrichten des Katalysators die Konzentration von mindestens einem Metall M in der wässerigen Lösung zwischen 0,01 und 25 mmol/l ist.

15. Verfahren gemäß Anspruch 14, **dadurch gekennzeichnet, daß** die Konzentration von mindestens einem Metall M in der wässerigen Lösung zwischen 0,5 und 20 mmol/l und vorzugsweise zwischen 0,5 und 15 mmol/l ist.

16. Verfahren gemäß einem der Ansprüche 1 bis 15, **dadurch gekennzeichnet, daß** beim Herrichten des Katalysators der PH-Wert der wässerigen Lösung mindestens einer Zusammensetzung des Metalls M ausgewählt ist zwischen 10 und 14 und vorzugsweise zwischen 10 und 12.

17. Verfahren gemäß einem der Ansprüche 1 bis 11, **dadurch gekennzeichnet, daß** beim Herrichten des Katalysators mindestens ein zusätzliches Element M beim Ausbilden des Trägers zugeführt wird.

18. Verfahren gemäß Anspruch 17, **dadurch gekennzeichnet, daß** beim Herrichten des Katalysators das zusätzliche Element M beim Synthetisieren des Trägers gemäß einer Technik der SOL-GEL Art zugeführt wird.

19. Verfahren gemäß Anspruch 18, **dadurch gekennzeichnet, daß** beim Herrichten des Katalysators eine wässerige Lösung mindestens einer organo-metallischen Zusammensetzung des Metalls M hydrolisiert wird mit einer organischen Lösung einer alcoxy Zusammensetzung eines Trägermetalls in einem alkoholischen Lösungsmittel und auf eine Temperatur zwischen 200 und 800° C erwärmt wird.

20. Verfahren gemäß einem der Ansprüche 1 bis 19, **dadurch gekennzeichnet, daß** der Katalysator reduziert wird unter Wasserstoff bei einer Temperatur zwischen 20 und 600° C, vorzugsweise zwischen 90 und 500° C.

21. Verfahren gemäß einem der Ansprüche 1 bis 20, **dadurch gekennzeichnet, dass** eine vorhergehende Reduktion bewirkt wird der Zusammensetzung des Metalls VIII in Lösung durch organische Moleküle mit reduzierender Eigenschaft, wie zum Beispiel der Ameisensäure.

22. Verfahren gemäß einem der Ansprüche 1 bis 21, **dadurch gekennzeichnet, dass** die Füllung zusammen gebracht wird mit dem Katalysator bei einer Temperatur zwischen 400 und 700° C mit einer Ergiebigkeit der Masse der behandelten Füllung pro Katalysatormasseneinheit zwischen 0,1 und 10 kg/kg/h bei einem Druck zwischen dem Atmosphärendruck und 4 Mpa.

23. Verfahren gemäß einem der Ansprüche 1 bis 22, **dadurch gekennzeichnet, dass** mindestens ein Teil des erzeugten Wasserstoffs recycelt wird mit einem molaren Recyclingverhältnis zwischen 0,1 und 10.

## Claims

1. A process for catalytic reforming and for producing aromatics in the presence of a catalyst comprising at least one support, at least one metal from group VIII of the periodic table and at least one additional element M selected from the group formed by germanium, tin, lead, rhenium, gallium, indium and thallium, said process being **characterized in that** the catalyst is prepared using a process in which said additional element M is introduced in an aqueous solvent in the form of at least one organometallic compound, which is soluble in an aqueous solvent and containing at least one carbon-M bond.

2. A process according to claim 1, **characterized in that** the feed is constituted by paraffinic, naphthenic and aromatic hydrocarbons containing 5 to 12 carbon atoms per molecule.

3. A process according to claim 1 or claim 2, in which the catalyst further contains at least one metalloid.

4. A process according to any one of claims 1 to 3, in which the catalyst further contains at least one halogen or halogen-containing compound.

5. A process according to any one of claims 1 to 4 in which in the catalyst, the group VIII metal is selected from iridium, nickel, palladium, platinum, rhodium and ruthenium, preferably from platinum and iridium.

6. A process according to any one of claims 1 to 5 in which in the catalyst, element M is selected from germanium and tin.

7. A process according to any one of claims 1 to 6 in which in the catalyst, the precursor of element M is selected from the group formed by hydroxides, oxides, halogen-containing compounds, carbonates and carboxylates of organometallic compounds of element M.

8. A process according to any one of claims 1 to 7 in which in the catalyst, the precursor of element M is selected from compounds with general formula (R₁)ₓM(R₂)_{y} where x+y = the valency of metal M and where R₁ is selected from the group formed by alkyl, cycloalkyl, aryl, alkylaryl and arylalkyl functions, and R₂ is a function with formula CₐH_{b}R'_{c}, where R' represents a hydroxide, carboxylate, PO₃H or SO₃H function.

9. A process according to any one of claims 1 to 8 in which in the catalyst, the precursor of element M is selected from the group formed by carboxylates of organic compounds of element M.

10. A process according to any one of claims 1 to 9 in which in the catalyst, the precursor of element M is tributyltin acetate.

11. A process according to any one of claims 1 to 10, in which in the catalyst, the group VIII metal, additional element M, optional halogen and optional metalloid are introduced into the support successively or simultaneously.

12. A process according to any one of claims 1 to 11, in which the catalyst is prepared by carrying out the following steps in any order:
• impregnating a support using an aqueous or organic solution of at least one group VIII metal, filtering, drying, calcining, reducing,
• impregnating the product obtained using an aqueous solution of at least one compound of element M, filtering, drying, calcining.

13. A process according to any one of claims 1 to 12, in which during preparation of the catalyst, the support is impregnated with an aqueous solution of at least one metal M, the volume of the solution being at least equal to the retention volume of the support, preferably higher than that volume.

14. A process according to any one of claims 1 to 13, in which during preparation of the catalyst, the concentration of at least one metal M in the aqueous solution is in the range 0.01 to 25 mmol/l.

15. A process according to claim 14, in which the concentration of at least one metal M in the aqueous solution is in the range 0.5 to 20 mmol/l, preferably in the range 0.5 to 15 mmol/l.

16. A process according to any one of claims 1 to 15, in which during preparation of the catalyst, the pH of the aqueous solution of at least one compound of metal M is selected so as to be between 10 and 14, preferably between 10 and 12.

17. A process according to any one of claims 1 to 11, in which during preparation of the catalyst, at least one additional element M is introduced during production of the support.

18. A process according to claim 17, in which during preparation of the catalyst, the additional element M is introduced during synthesis of the support using a sol-gel type technique.

19. A process according to claim 18, in which, during preparation of the catalyst, an aqueous solution of an organometallic compound of metal M is used to hydrolyse an organic solution of an alkoxy compound of a metal of the support in an alcoholic solvent, and heated to a temperature in the range 200°C to 800°C.

20. A process according to any one of claims 1 to 19, in which the catalyst is reduced in hydrogen at a temperature in the range 20°C to 600°C, preferably in the range 90°C to 500°C.

21. A process according to any one of claims 1 to 20, in which prior reduction of the group VIII metal compound is carried out in solution by organic molecules with a reducing nature such as formic acid.

22. A process according to any one of claims 1 to 21, in which the feed to be treated is brought into contact with the catalyst at a temperature in the range 400°C to 700°C, with a mass flow rate of treated feed per unit mass of catalyst in the range 0.1 to 10 kg/kg/hour, at a pressure in the range from atmospheric pressure to 4 MPa.

23. A process according to any one of claims 1 to 22, in which at least a portion of the hydrogen produced is recycled in a molar recycle ratio in the range 0.1 to 10.
